(19) Europäisches Patentamt
European Patent Office
Office européen des brevets

(11) EP 1 370 077 B1

(12) **EUROPEAN PATENT SPECIFICATION**

(45) Date of publication and mention of the grant of the patent:
**28.09.2011 Bulletin 2011/39**

(51) Int Cl.:
***H04N 5/44** (2011.01)* ***H04N 5/60** (2006.01)*

(21) Application number: **03253490.1**

(22) Date of filing: **03.06.2003**

(54) **Trap circuit and television receiver for its application**

Sperrkreisschaltung und Fernsehempfänger zu deren Anwendung

Circuit bouchon et récepteur de télévision pour son utilisation

(84) Designated Contracting States:
**FR GB NL**

(30) Priority: **03.06.2002 JP 2002162215**

(43) Date of publication of application:
**10.12.2003 Bulletin 2003/50**

(73) Proprietor: **Kabushiki Kaisha Toshiba**
**Tokyo 105-8001 (JP)**

(72) Inventors:
- **Murayama, Akihiro,**
**Intellectual Property Division**
**Tokyo (JP)**
- **Kambashi, Tomoharu,**
**Intellectual Property Division**
**Tokyo (JP)**

(74) Representative: **Granleese, Rhian Jane**
**Marks & Clerk LLP**
**90 Long Acre**
**London**
**WC2E 9RA (GB)**

(56) References cited:
**EP-A- 0 417 913** **GB-A- 2 262 868**
**US-A- 4 107 730** **US-A- 4 876 739**
**US-A- 5 220 602** **US-A- 5 239 367**
**US-A- 6 147 713** **US-A1- 2002 005 912**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a television receiver and a trap circuit used in the television receiver.

As shown in Fig. 7, a conventional television receiver includes a tuner 51 which receives a received signal, a surface acoustic wave (SAW) filter 52 connected to tuner 51, a video intermediate frequency processing circuit 53 connected to surface acoustic wave filter 52, a trap filter 55 connected to video intermediate frequency processing circuit 53, and a compensation circuit 56 which is connected to trap filter 55 and outputs a video signal VS.

Tuner 51 receives a received signal and outputs a television broadcast signal of a specific frequency band. Surface acoustic wave filter 52 extracts a video intermediate frequency signal from the television broadcast signal. Video intermediate frequency processing circuit 53 demodulates the video intermediate frequency signal, which is subjected to amplitude modulation (AM), into a composite video signal CVBS (Composite Video Baseband Signal). Not only the video signal but also a carrier modulated audio signal is superimposed on the output signal from tuner 51. A frequency band of the audio signal is higher than that of the video signal. Trap filter 55 removes an audio signal in a frequency band set for a trap frequency ft from the composite video signal CVBS. Compensation circuit 56 corrects the composite video signal CVBS in the frequency band of the video signal and outputs the video signal (VS). Specifically, the composite video signal CVBS undergoes distortions in terms of time and amplitude, while passing through various filters in signal processing performed by tuner 51, surface acoustic wave filter 52, video intermediate frequency processing circuit 53 and trap filter 55.

In general, trap filter 55 is formed discretely by use of discrete components. However, along with the miniaturization of a visual apparatus such as a television, the trap filter tends to be formed as a semiconductor integrated circuit.

However, in the case of forming trap filter 55 as a semiconductor integrated circuit, there was a problem that a time constant of the filter and the like vary due to variations in wafer fabrication and thus frequency characteristics thereof drastically changes compared to that in the case of forming the filter discretely. In Japan, it is satisfactory that the trap filter corresponds to one broadcast standard. However, when there exist multiple broadcast standards such as BIG system, I system and D/K system as in Europe, for example, there was a problem that trap filters 55, which have trap frequencies ft corresponding to frequencies of the respective systems, have to be provided individually.

For example, with respect to a composite video signal CVBS, an audio signal is disposed at 5.5 MHz in the B/G system, at 6.0 MHz in the I system and at 6.5 MHz in the D/K system. When the audio signal exists in a position adjacent to a chroma signal (CS) that is a color information signal as in the B/G system, there was a problem that the CS was attenuated by a trap circuit.

US 2002/005912A discloses a trap circuit comprising:

(i) a filter unit which receives a composite video signal and outputs a video signal,
(ii) the filter unit removing a signal of a trap frequency band from the composite video signal by filter characteristics depending on a resonance sharpness; and
(iii) an adjustment circuit which receives a reference signal and frequency setting data, the adjustment circuit setting the trap frequency band of the filter unit in accordance with the reference signal and the frequency setting data.

US 5,774,027A discloses a trap circuit in the form of an IC comprising a mutal conductance and capacity of a differential amplifier.

The invention is a trap circuit as defined in claim 1.

Fig. 1 is a view explaining a trap circuit according to an embodiment of the present invention.
Fig. 2 is a view explaining details of a circuit example of the trap circuit according to the embodiment of the present invention.
Figs. 3 (a) and 3 (b) are graphs explaining an operation of a sharpness adjustment sub-unit in the trap circuit according to the embodiment of the present invention.
Figs. 4 (a) and 4 (b) are graphs explaining an operation of a high-frequency attenuation sub-unit in the trap circuit according to the embodiment of the present invention.
Figs. 5 (a) and 5 (b) are graphs explaining an operation of an automatic adjustment circuit in the trap circuit according to the embodiment of the present invention.
Fig. 6 is a view explaining a television receiver of the present invention.
Fig. 7 is a view explaining a conventional television receiver.

A television receiver according to an embodiment of the present invention will be explained in reference to the drawings as follows.

As shown in Fig. 6. the television receiver includes a tuner 51, a surface acoustic wave filter 52 connected to tuner 51, a video intermediate frequency processing circuit 53.

The television receiver according to the embodiment of the present invention is constituted as described above and tuner 51 selects a signal of a specific frequency band from a television broadcast signal and outputs the signal. Surface acoustic wave filter 52 extracts a video intermediate frequency signal from the signal of a specific frequency band, which is outputted from tuner 51. Video intermediate frequency processing circuit 53 demodulates a composite video signal CVBS (Composite Video Baseband Signal), which is subjected to amplitude modulation (AM) by surface acoustic wave filter 52, and outputs the signal as a base band signal. Not only the video signal but also a carrier modulated audio signal is superimposed on the output signal from tuner 51. A frequency band of the audio signal is higher than that of the video signal VS. Trap circuit 54 receives the composite video signal CVBS, sharpness setting data QD and attenuation setting data AD. In trap circuit 54, resonance sharpness Q of filter characteristics is set by the sharpness setting data QD and attenuation of filter characteristics is corrected by the attenuation setting data AD. Subsequently, trap circuit 54 outputs a video signal, from which a signal in a trap frequency band is removed by the filter characteristics depending on the resonance sharpness and the attenuation, receives a reference signal RS and frequency setting data FD in an automatic adjustment circuit and thus sets a trap frequency ft.

As shown in Fig. 1, trap circuit 54 according to the embodiment of the present invention includes a filter unit 1 and an automatic adjustment circuit 3 (an adjustment circuit) connected to filter unit 1. Filter unit 1, as shown in Fig. 1, includes a first filter 2a and a second filter 2b connected to an output side of first filter 2a. Furthermore, first filter 2a includes a first trap filter 10a, a first sharpness adjustment sub-unit 11a connected to first trap filter 10a and a first high-frequency attenuation sub-unit 12a connected to first trap filter 10a. Moreover, second filter 2b includes a second trap filter 10b, a second sharpness adjustment sub-unit 11b connected to second trap filter 10b and a second high-frequency attenuation sub-unit 12b connected to second trap filter 10b.

Automatic adjustment circuit 3 includes a frequency control circuit 32 connected to first and second trap filters 10a and 10b, a reference filter 30 connected to frequency control circuit 32; and a phase detector 31 connected to an output side of reference filter 30 and to frequency control circuit 32.

The trap circuit 54 according to the embodiment of the present invention is constituted as described above. First trap filter 10a receives a composite video signal CVBS and outputs a first removed signal TS from which a first audio signal S1 is removed. First audio signal S1 is an audio signal of a specific frequency band superimposed on the composite video signal CVBS. The second trap filter 10b outputs a video signal VS obtained by further removing a second audio signal S2 from the first removed signal TS. Second audio signal S2 is an audio signal of a frequency band different from that of first audio signal S1. In the case where the target audio signals are sound multiplex signals, first and second audio signals S1 and S2 can be any of a main carrier signal and a sub-carrier signal, respectively. First trap filter 10a is a filter taking a first trap frequency ft1 as a center frequency, and second trap filter 10b is a filter taking a second trap frequency ft2 as a center frequency. Herein, characteristics of first and second trap filters 10a and 10b are collectively set as the trap frequency ft of the filter unit.

First sharpness adjustment sub-unit 11a sets resonance sharpness Q1 of the first trap filter 10a in accordance with the sharpness setting data QD. First high-frequency attenuation sub-unit 12a sets high-frequency attenuation of first trap filter 10a in accordance with the attenuation setting data AD. Note that the resonance sharpness Q represents characteristics of the filters and is expressed by Q = fm/fb assuming that a frequency bandwidth equal to or lower than a level that attenuates a signal level by 3 dB is fb and the center frequency is fm.

Frequency control circuit 32 receives the frequency setting data FD and outputs a frequency control signal FS. Reference filter 30 receives the frequency control signal FS and outputs a phase-shifted signal SS. Phase-shifted signal SS is obtained by shifting a phase of a reference signal RS by a predetermined amount by controlling a phase and frequency characteristics. Phase detector 31 receives the reference signal RS and the phase-shifted signal SS and outputs a result of a phase comparison therebetween as a phase error detection signal PS. Frequency control circuit 32 receives the phase error detection signal PS and feeds back the phase error detection signal PS to reference filter 30 as the filter frequency control signal FS, thus constituting an automatic adjustment loop. Frequency control circuit 32 converges the reference signal RS and the output signal of reference filter 30 so as to have a predetermined phase difference therebetween and outputs the frequency control signals FS to first and second trap filters 10a and 10b. The predetermined trap frequencies ft1 and ft2 of first and second trap filters 10a and 10b are set by the frequency control signals FS. By setting the trap frequency ft in accordance with the frequency setting data FD, it is possible to enable trap circuit 54 to correspond to multiple broadcast standards. For reference filter 30, may use of a circuit of the television receiver type as those of trap filters 10 is considered. It is unnecessary to consider variations of time constants of the trap filters.

An operation according to the embodiment of the present invention will be described by showing an example of an actual broadcast standard. Fig. 3 (a) is a graph showing a relationship between respective signal level and frequency of a luminance signal Y, a chroma signal CS, the first and second audio signals S1 and S2 in the case where the broadcast standard is the B/G system. The luminance signal Y is a signal expressing an intensity of a video signal and covers a wide band. The chroma signal CS is a color information signal and has upper and lower sidebands, of which center is amplitude modulated carrier 4.433619 MHz (hereinafter abbreviated as 4.4 MHz). As to the audio signals, in the case of NICAM (Near Instantaneously Companded Audio Multiplex) stereo broadcast used in Europe and the like, the first audio signal S1 is 5.5 MHz and the second audio signal S2 is 5.74 MHz. In the B/G system, the first and second audio signals S1 and S2 exist in positions adjacent to the chroma signal CS. When the resonance sharpness Q is reduced, the signals in the frequency band of the chroma signal CS are attenuated. Thus, first and second sharpness adjustment sub-units 11a and 11b receive the sharpness setting data QD and set the resonance sharpness Q1 and Q2 of first and second trap filters 10a and 10b to be high as shown in Fig. 3 (b), respectively. Accordingly, the attenuation of the chroma signal CS is suppressed.

In general, the filter circuit has a tendency that, when the resonance sharpness Q is reduced, the maximum attenuation is increased. As shown in Fig. 4 (a), when the audio signals exist in positions not adjacent to the chroma signal CS that is the color information signal (for example, in the case of the I system in which the first audio signal S1 is disposed in the position of 6.0 MHz or in the case of the D/K system in which the first audio signal S1 is disposed in the position of 6.5 MHz), the resonance sharpness Q is set to be small within a range in which the chroma signal CS is not extremely attenuated. When the resonance sharpness Q is set to be small at the trap frequency ft at which trap circuit 54 attenuates signals, as shown in Fig. 4 (b), the attenuation L2 of trap circuit 54 is set to be in a position lower than that of the attenuation L1 shown in Fig. 3 (b). Thus, it is made possible to remove the audio signals more clearly.

As to the frequency characteristics of a group delay time of the trap circuit 54, the higher the frequency gets, the more the delay time is increased. Control of the resonance sharpness Q of first and second trap filters 10a and 10b enables control of the frequency characteristics of the group delay time. As shown in Fig. 5 (a), when the resonance sharpness Q is high (a high mode), the delay time is shortened in a lower frequency than the trap frequency ft and is increased in a higher frequency than the trap frequency ft. When the resonance sharpness Q is set low (a low mode), a tendency opposite to the above-described is obtained. When there is flexibility for chroma attenuation, the control of the resonance sharpness Q enables selection of a desired group delay time.

As shown in Fig. 5 (b), a high-frequency attenuation unit (for example, the first high-frequency attenuation sub-unit 12a and/or the second high-frequency attenuation sub-unit 12b) receives the attenuation setting data AD and switches to a high-frequency attenuation mode. Pass gains in upper and lower frequencies sandwiching the trap frequency ft therebetween can be made imbalance and the low frequencies can be emphasized. Therefore, gains in the vicinity of the chroma frequency can be increased. When it is desired to increase a level of the chroma signal CS, the high-frequency attenuation unit is set to be in a high-frequency attenuation mode. A compensation function can be provided.

A circuit example of first and second filters 2a and 2b used in trap circuit 54 shown in Fig. 1 according to the embodiment of the present invention will be described in detail below. As shown in Fig. 2, first filter 2a (second filter 2b) includes first trap filter 10a (second trap filter 10b), first sharpness adjustment sub-unit 11a (second sharpness adjustment sub-unit 11b) connected to first trap filter 10a (second trap filter 10b), and first high-frequency attenuation sub-unit 12a (second high-frequency attenuation sub-unit 12b) connected to first trap filter 10a (second trap filter 10b).

Each of first and second trap filters 10a and 10b includes: a first amplifier 20 which has a negative input terminal, a positive input terminal receiving a composite video signal CVBS, a frequency control terminal receiving a frequency control signal FS and an output terminal; a first buffer 15 which has its input terminal connected to the output terminal of first amplifier 20; a first capacity C1 connected between the output terminal of first amplifier 20 and a ground GND; a second amplifier 21 which has a negative input terminal, a positive input terminal connected to an output terminal of first buffer 15, a frequency control terminal receiving a frequency control signal FS and an output terminal; a second capacity C2 connected between the output terminal of second amplifier 21 and the positive input terminal of first amplifier 20; and a second buffer 16 which has its input terminal connected to the output terminal of second amplifier 21 and its output terminal connected to the negative input terminal of first amplifier 20.

Sharpness adjustment unit (each of first and second sharpness adjustment sub-units 11a and 11b) includes: a first resistance R1 connected between the negative input terminal of first amplifier 20 and the negative input terminal of second amplifier 21; a sharpness switching switch SW1 which has a control electrode receiving sharpness setting data QD, a first main electrode connected to one end of the first resistance R1 and a second main electrode; a second resistance R2 which has its one end connected to the negative input terminal of second amplifier 21; a third resistance R3 connected between the second main electrode of the sharpness switching switch SW1 and the other end of the second resistance R2; and a reference voltage source 25 which has its positive electrode connected to a connection point of the second and third resistances R2 and R3 and its negative electrode connected to the ground GND.

Each of the first and second high-frequency attenuation sub-units 12a and 12b includes: a capacity C3 which has its one end connected to the output terminal of the second amplifier 21; and an attenuation switch SW2 which has a control electrode receiving attenuation setting data AD, a first main electrode connected to the other end of the capacity C3 and a second main electrode connected to the ground GND.

A trans-conductance amplifier (a voltage-current converter) and the like may be used for first and second amplifiers 20 and 21. The trans-conductance amplifier can be changed a voltage-current conversion ratio in accordance with a filter frequency setting signal from automatic adjustment circuit 3.

First and second filters 2a and 2b according to the embodiment of the present invention are constituted as described above. First sharpness adjustment sub-unit 11a (second sharpness adjustment sub-unit 11b) adjusts the resonance sharpness Q1 (Q2) of first trap filter 10a (second trap filter 10b) in accordance with the sharpness setting data. First high-frequency attenuation sub-unit 12a (second high-frequency attenuation sub-unit 12b) corrects filter high-frequency characteristics of first trap filter 10a (second trap filter 10b) in accordance with the attenuation setting data. In accordance with the filter characteristics determined by first sharpness adjustment sub-unit 11a (second sharpness adjustment sub-unit 11b) and first high-frequency attenuation sub-unit 12a (second high-frequency attenuation sub-unit 12b), first trap filter 10a (second trap filter 10b) outputs a signal obtained by removing an audio signal of a specific frequency band from the composite video signal CVBS.

When the sharpness switching switch SW1 and the attenuation switch SW2 are both open, it is assumed that a trans-conductance value of first amplifier 20 controlled by a bias current of the frequency control signal FS is gm1, a trans-conductance value of second amplifier 21 controlled by the bias current of the frequency control signal FS is gm2, an attenuation is k = R2/(R1+R2) and s = j?. Consequently, a transfer function H of the trap circuit is expressed by the following equation (1).

[Equation 1]

$$H = \{s^2 + gm1 \cdot gm2/(C1 \cdot C2)\}/\{s^2 + s \cdot k \cdot gm2/C2 + gm1 \cdot gm2/(C1 \cdot C2)\} \quad \ldots (1)$$

The resonance sharpness Q of trap filter 10 is expressed by the following equation (2).

[Equation 2]

$$Q = \{gm1 \cdot C2/(gm2 \cdot C1)\}^{1/2}/k \quad \ldots (2)$$

The trap frequency (zero frequency) ft is expressed by the following equation (3).

[Equation 3]

$$ft = \{gm1 \cdot gm2/(C1 \cdot C2)\}^{1/2} \quad \ldots (3)$$

Comparing the equation (2) to the equation (3), it is found out that changing of the attenuation k enables only the resonance sharpness Q to be controlled without changing the trap frequency ft and that the smaller the attenuation k is, the higher the resonance sharpness Q becomes. When the sharpness setting switch SW1 is turned on, the output signal of the trap circuit is attenuated and thus the resonance sharpness Q becomes much higher.

When the high-frequency attenuation setting switch SW2 is turned on in a state where the sharpness setting switch SW1 is off, a transfer function H of the trap circuit is expressed by the following equation (4).

[Equation 4]

$$H = \{C2/(C2+C3)\}\{s^2 + gm1 \cdot gm2/(C1 \cdot C2)\}/\{s^2 + s \cdot k \cdot gm2/(C2+C3) + gm1 \cdot gm2/C1 \cdot (C2+C3)\} \quad \ldots (4)$$

A pole frequency indicated by the denominator in the equation (4) can be changed without changing the trap frequency ft. In other words, a low-pass gain is similar to that in the equation (1), a high-pass gain is given by C2/(C2+C3) and selection of the value C3 enables control of high frequency attenuation.

When the resonance sharpness Q is set to a high value, a delay time is increased in a higher frequency side than the trap frequency ft and is shortened in a lower frequency side than the trap frequency ft. Changing the value of the resonance sharpness Q enables delay compensation.

According to the trap circuit of the embodiment of the present invention, the frequency characteristics, which are affected by variations in time constants of the filters and the like, can be corrected and switched and the attenuation of the chroma signal CS, which is the color information signal, and the group delay time for the video signal can be corrected.

In trap circuit 54 shown In Fig. 1, first and second filters 2a and 2b are series-connected in two stages. However, when there are multiple signals to be removed in the composite video signal CVBS, filters may be connected In multiple stages.

In the trap circuit shown in Fig. 1, sharpness adjustment sub-unit 11 and high-frequency attenuation sub-unit 12 are provided in both of first and second filters 2a and 2b. However, those sub-units may be provided in any one of first and second filters 2a and 2b.

The frequency setting data FD, the sharpness setting data QD and the attenuation setting data AD are inputted to separate terminals, respectively. However, if control patterns of those data are identical, it is possible to share the terminal thereamong.

The sharpness setting data QD and the attenuation setting data AD are inputted to first and second filters 2a and 2b In trap circuit 54 shown in Fig. 1. However, control signals dedicated to the respective data may be prepared.

Other embodiments of the present invention will be apparent to those skilled in the art from consideration of the specification and practice of the invention disclosed herein. It is intended that the specification and example embodiments be considered as exemplary only, with a true scope of the invention being indicated by the following claims.

## Claims

1. A trap circuit (54) configured to receive a composite video signal including an audio signal of a trap frequency band and to output a video signal, the composite video signal being obtained by demodulating a video intermediate frequency signal and containing an audio signal, comprising:

    a filter unit (1) configured to remove the audio signal from the composite video signal by filter characteristics depending on a resonance sharpness (Q) and an attenuation, the resonance sharpness being set by the sharpness setting data (QD), and the attenuation at a high frequency side being corrected by the attenuation setting data (AD); and
    an adjustment circuit (3) configured to receive a reference signal and frequency setting data, the adjustment circuit setting the trap frequency band of the filter unit in accordance with the reference signal and the frequency setting data;
    wherein the filter unit includes:

        a first filter (2a) which receives the composite video signal and outputs a first removed signal obtained by removing a first audio signal from the composite video signal; and
        a second filter (2b) which is serial-connected to the first filter, receives the first removed signal and removes a second audio signal therefrom;
        wherein the first filter includes:

            a first trap filter (10a) which receives the composite video signal and removes a first audio signal of a trap frequency band therefrom;
            a first sharpness adjustment sub-unit (11a) which receives the sharpness setting data and sets the resonance sharpness; and
            a first high-frequency attenuation sub-uuit (12a) which receives the attenuation setting data and sets the attenuation.

2. The trap circuit of claim 1, wherein the first trap filter includes:

    a first amplifier (20) which has a negative input terminal an output terminal, a positive input terminal receiving the composite video signal, a frequency control terminal receiving a frequency control signal and an output terminal;
a first buffer (15) which has its input terminal connected to the output terminal;
a first capacity (C1) connected between the output terminal and the ground;
a second amplifier (21) which has a negative input terminal, a positive input terminal connected to an output terminal of the first buffer, a frequency control terminal receiving a frequency control signal and an output terminal;
a second capacity (C2) connected between the output terminal of the second amplifier and the positive input terminal of the first amplifier; and
a second buffer (16) connected between the output terminal of the second amplifier and the negative input terminal of the first amplifier.

**3.** The trap circuit of claim 2, wherein the first sharpness adjustment unit includes:

a first resistance (R1) connected between the negative input terminal of the first amplifier and the negative input terminal of the second amplifier;
a sharpness switching switch (SW1) which has a control electrode receiving the sharpness setting data and a first main electrode connected to another end of the first resistance;
a second resistance (R2) which has its one end connected to the negative input terminal of the second amplifier;
a third resistance (R3) connected between a second main electrode of the sharpness switching switch and the other end of the second resistance, and
a reference voltage source which has its positive electrode connected to a connection point of the second and third resistances and its negative electrode connected to the ground.

**4.** The trap circuit of claim 1, wherein the second filter is a filter equivalent to the first filter.

**5.** The trap circuit of claim 1, wherein the adjustment circuit includes a reference filter which is a filter equivalent to the first trap filter.

**6.** The trap circuit of claim 2, wherein the first high-frequency unit includes;
a capacity (C3) which has its one end connected to the trap filter; and
an attenuation switch (SW2) which has a first main electrode connected to the other end of the capacity, a control electrode receiving the attenuation setting data and a second main electrode connected to the ground.

**7.** A television receiver, comprising:

a tuner (51);
a surface acoustic wave filter (52) which extracts a video intermediate frequency signal from an output signal of the tuner and outputs the signal;
a video intermediate frequency processing circuit (53) which demodulates the video intermediate frequency signal intro a composite video signal; and
a trap circuit (54) according to any preceding claim.

**8.** The trap circuit of claim 1, wherein the first sharpness adjustment sub-unit sets the resonance sharpness of the first trap filter based on the sharpness setting data, and the first high frequency attenuation sub-unit sets the attenuation in the first trap filter based on the attenuation setting data.

**9.** The trap circuit of claim 1, or 8, wherein the adjustment circuit includes:

a reference filter receiving the reference signal and a frequency control signal and outputting a phase-shifted signal;
a phase detector receiving the reference signal and the phase-shifted signal and outputting a phase error detection signal; and
a frequency control unit receiving the frequency setting data and the phase terror detection signal and feeds back the frequency control signal to the reference filter, and wherein the difference between the reference signal and the phase-shifted signal from the reference filter are controlled so as to have a predetermined value.

**Patentansprüche**

1. Sperrkreis (54), dafür konfiguriert, ein Videomischsignal zu empfangen, das ein Audiosignal eines Sperrfrequenzbandes aufweist, und ein Videosignal auszugeben, wobei das Videomischsignal durch Demodulieren eines Videozwischenfrequenzsignals erlangt wird und ein Audiosignal enthält, umfassend:

   eine Filtereinheit (1), die dafür konfiguriert ist, das Audiosignal aus dem Videomischsignal durch Filterkennlinien zu entfernen, die von einer Resonanzschärfe (Q) und einer Dämpfung abhängen, wobei die Resonanzschärfe durch die Schärfeeinstelldaten (QD) eingestellt wird und die Dämpfung auf einer Hochfrequenzseite durch die Dämpfungseinstelldaten (AD) korrigiert wird; und
   eine Nachregelschaltung (3), die dafür konfiguriert ist, ein Bezugssignal und Frequenzeinstelldaten zu empfangen, wobei die Nachregelschaltung das Sperrfrequenzband der Filtereinheit gemäß dem Bezugssignal und den Frequenzeinstelldaten einstellt;
   wobei die Filtereinheit aufweist:

      ein erstes Filter (2a), welches das Videomischsignal empfängt und ein erstes gesäubertes Signal ausgibt, das durch Entfernen eines ersten Audiosignals aus dem Videomischsignal erlangt wird; und
      ein zweites Filter (2b), welches mit dem ersten Filter in Reihe geschaltet ist, das erste gesäuberte Signal empfängt und daraus ein zweites Audiosignal entfernt;
      wobei das erste Filter aufweist:

         ein erstes Kerbfilter (10a), welches das Videomischsignal empfängt und ein erstes Audiosignal eines Sperrfrequenzbandes daraus entfernt;
         eine erste Schärfenachregelungsteileinheit (11a), welche die Schärfeeinstelldaten empfängt und die Resonanzsehärlfe einstellt; und
         eine erste Hochfrequenzdämpfungsteileinheit (12a), welche die Dämpfungseinstelldaten empfängt und die Dämpfung einstellt.

2. Sperrkreis nach Anspruch 1, wobei das erste Kerbfilter aufweist:

   einen ersten Verstärker (20), der einen negativen Eingangsanschluss, einen Ausgangsanschluss, einen positiven Eingangsanschluss, der das Videomischsignal empfängt, einen Frequenzsteuerungsanschluss, der ein Frequenzsteuerungssignal empfängt, und einen Ausgangsanschluss aufweist;
   eine erste Trennstufe (15), deren Eingangsanschluss mit dem Ausgangsanschluss verbunden ist;
   eine erste Kapazität (C1), die zwischen den Ausgangsanschluss und die Masse geschaltet ist;
   einen zweiten Verstärker (21), der einen negativen Eingangsanschluss, einen positiven Eingangsanschluss, der mit einem Ausgangsanschluss der ersten Trennstufe verbunden ist, einen Frequenzsteuerungsanschluss, der ein Frequenzsteuerungssignal empfängt, und einen Ausgangsanschluss aufweist;
   eine zweite Kapazität (C2), die zwischen den Ausgangsanschluss des zweiten Verstärkers und den positiven Eingangsanschluss des ersten Verstärkers geschaltet ist; und
   eine zweite Trennstufe (16), die zwischen den Ausgangsanschluss des zweiten Verstärkers und den negativen Eingangsanschluss des ersten Verstärkers geschaltet ist.

3. Sperrkreis nach Anspruch 2, wobei die erste Schärfenachregelungsteileinheit aufweist:

   einen ersten Widerstand (R1), der zwischen den negativen Eingangsanschluss des ersten Verstärkers und den negativen Eingangsanschluss des zweiten Verstärkers geschaltet ist;
   einen Schärfeumschaltungsschalter (SW1), der eine Steuerelektrode, welche die Schärfeeinstelldaten empfängt, und eine erste Hauptelektrode, die mit einem anderen Ende des ersten Widerstandes verbunden ist, aufweist;
   einen zweiten Widerstand (R2), dessen eines Ende mit dem negativen Eingangsanschluss des zweiten Verstärkers verbunden ist;
   einen dritten Widerstand (R3), der zwischen eine zweite Hauptelektrode des Schärfeumschaltungsschalters und das andere Ende des zweiten Widerstandes geschaltet ist; und
   eine Bezugsspannungsquelle, deren positive Elektrode mit einem Verbindungspunkt des zweiten und des dritten Widerstandes verbunden ist und deren negative Elektrode mit der Masse verbunden ist.

4. Sperrkreis nach Anspruch 1, wobei das zweite Filter ein dem ersten Filter äquivalentes Filter ist.

5. Sperrkreis nach Anspruch 1, wobei die Nachregelschaltung ein Bezugsfilter aufweist, das ein dem ersten Kerbfilter äquivalentes Filter ist.

6. Sperrkreis nach Anspruch 2, wobei die erste Hochfrequenzdämpfungsteileinheit aufweist:

eine Kapazität (C3), deren eines Ende mit dem Kerbfilter verbunden ist; und
einen Dämpfungsschalter (SW2), dessen erste Hauptelektrode mit dem anderen Ende der Kapazität verbunden ist, wobei eine Steuerelektrode die Dämpfungseinstelldaten empfängt und eine zweite Hauptelektrode mit der Masse verbunden ist.

7. Fernschempfänger, umfassend:

einen Tuner (51);
ein akustisches Oberflächenwellenfilter (52), das ein Videozwischenfrequenzsignal aus einem Ausgangssignal des Tuners extrahiert und das Signal ausgibt;
eine Videozwischenfrequenzverarbeitungsschaltung (53), die das Videozwischenfrequenzsignal zu einem Videomischsignal demoduliert; und
einen Sperrkreis (54) nach einem der vorhergehenden Ansprüche.

8. Sperrkreis nach Anspruch 1, wobei die erste Schärfenachregelungsteileinheit die Resonanzschärfe des ersten Kerbfilter auf der Grundlage der Schärfeeinstelldaten einstellt und die erste Hochfrequenzdämpfungsteileinheit die Dämpfung im ersten Kerbfilter auf der Grundlage der Dämpfungseinstelldaten einstellt.

9. Sperrkreis nach Anspruch 1 oder 8, wobei die Nachregelschaltung aufweist:

ein Bezugsfilter, welches das Bezugssignal und ein Frequenzsteuerungssignal empfängt und ein phasenverschobenes Signal ausgibt;
einen Phasendetektor, der das Bezugssignal und das phasenverschobene Signal empfängt und ein Phasenfehlerermittlungssignal ausgibt; und
eine Frequenzsteuerungseinheit, welche die Frequenzeinstelldaten und das Phasenfehlerermittlungssignal empfängt und das Frequenzsteuerungssignal zum Bezugsfilter rückkoppelt, und wobei die Differenz zwischen dem Bezugssignal und dem phasenverschobenen Signal vom Bezugsfilter so gesteuert wird, dass sie einen vorbestimmten Wert aufweist.

## Revendications

1. Circuit bouchon (54) configuré de manière à recevoir un signal vidéo composite incluant un signal audio d'une bande de fréquence bouchon et à générer en sortie un signal vidéo, le signal vidéo composite étant obtenu en démodulant un signal vidéo de fréquence intermédiaire et contenant un signal audio, le circuit comprenant :

une unité de filtre (1) configurée de manière à supprimer le signal audio du signal vidéo composite par le biais de caractéristiques de filtre dépendantes d'une netteté de résonance (Q) et d'une atténuation, la netteté de résonance étant définie par les données de paramétrage de netteté (QD), et l'atténuation côté haute fréquence étant corrigée par les données de paramétrage d'atténuation (AD) ; et
un circuit de réglage (3) configuré de manière à recevoir un signal de référence et des données de paramétrage de fréquence, le circuit de réglage définissant la bande de fréquence bouchon de l'unité de filtre selon le signal de référence et les données de paramétrage de fréquence ;
dans laquelle l'unité de filtre comprend :

un premier filtre (2a) qui reçoit le signal vidéo composite et génère en sortie un premier signal extrait obtenu en supprimant un premier signal audio du signal vidéo composite ; et
un second filtre (2b) qui est connecté en série au premier filtre, qui reçoit le premier signal extrait et supprime un second signal audio de celui-ci ;
dans lequel le premier filtre comprend :

un premier filtre bouchon (10a) qui reçoit le signal vidéo composite et supprime un premier signal audio d'une bande de fréquence bouchon de celui-ci ;

une première sous-unité de réglage de netteté (11a) laquelle reçoit les données de paramétrage de netteté et définit la netteté de résonance ; et
une première sous-unité d'atténuation de haute fréquence (12a) laquelle reçoit les données de paramétrage d'atténuation et définit l'atténuation.

**2.** Circuit bouchon selon la revendication 1, dans lequel le premier filtre bouchon comprend:

un premier amplificateur (20) lequel présente une borne d'entrée négative, une borne de sortie, une borne d'entrée positive recevant le signal vidéo composite, une borne de commande de fréquence recevant un signal de commande de fréquence et une borne de sortie ;
une première mémoire tampon (15) dont la borne d'entrée est connectée à la borne de sortie ;
une première capacitance (C1) connectée entre la borne de sortie et la terre ;
un second amplificateur (21) lequel présente une borne d'entrée négative, une borne d'entrée positive connectée à une borne de sortie de la première mémoire tampon, une borne de commande de fréquence recevant un signal de commande de fréquence et une borne de sortie ;
une seconde capacitance (C2) connectée entre la borne de sortie du second amplificateur et la borne d'entrée positive du premier amplificateur ; et
une seconde mémoire tampon (16) connectée entre la borne de sortie du second amplificateur et la borne d'entrée négative du premier amplificateur.

**3.** Circuit bouchon selon la revendication 2, dans lequel la première unité de réglage de netteté comprend :

une première résistance (R1) connectée entre la borne d'entrée négative du premier amplificateur et la borne d'entrée négative du second amplificateur ;
un commutateur de commutation de netteté (SW1) lequel présente une électrode de commande recevant les données de paramétrage de netteté et une première électrode principale connectée à une autre extrémité de la première résistance ;
une deuxième résistance (R2) dont une extrémité est connectée à la borne d'entrée négative du second amplificateur ;
une troisième résistance (R3) connectée entre une seconde électrode principale du commutateur de commutation de netteté et l'autre extrémité de la deuxième résistance ; et
une source de tension de référence dont l'électrode positive est connectée à un point de connexion des deuxième et troisième résistances, et dont l'électrode négative est connectée à la terre.

**4.** Circuit bouchon selon la revendication 1, dans lequel le second filtre est un filtre équivalant au premier filtre.

**5.** Circuit bouchon selon la revendication 1, dans lequel le circuit de réglage comprend un filtre de référence qui est un filtre équivalant au premier filtre bouchon.

**6.** Circuit bouchon selon la revendication 2, dans lequel la première unité haute fréquence comprend :

une capacitance (C3) dont une extrémité est connectée au filtre bouchon ; et
un commutateur d'atténuation (SW2) dont une première électrode principale est connectée à l'autre extrémité de la capacitance, une électrode de commande recevant les données de paramétrage d'atténuation, et dont une seconde électrode principale est connectée à la terre.

**7.** Récepteur de télévision, comprenant :

un syntoniseur (51) ;
un filtre d'onde acoustique de surface (52) lequel extrait un signal vidéo de fréquence intermédiaire à partir d'un signal de sortie du syntoniseur et génère en sortie le signal ;
un circuit de traitement vidéo de fréquence intermédiaire (53) lequel démodule le signal vidéo de fréquence intermédiaire en un signal vidéo composite ; et
un circuit bouchon (54) selon l'une quelconque des revendications précédentes.

**8.** Circuit bouchon selon la revendication 1, dans lequel la première sous-unité de réglage de netteté définit la netteté de résonance du premier filtre bouchon sur la base des données de paramétrage de netteté, et la première sous-unité d'atténuation de haute fréquence définit l'atténuation dans le premier filtre bouchon sur la base des données de paramétrage d'atténuation.

**9.** Circuit bouchon selon la revendication 1 ou 8, dans lequel le circuit de réglage comprend :

un filtre de référence recevant le signal de référence et un signal de commande de fréquence, et générant en sortie un signal déphasé ;
un détecteur de phase recevant le signal de référence et le signal déphasé, et générant en sortie un signal de détection d'erreur de phase ; et
une unité de commande de fréquence recevant les données de paramétrage de fréquence et le signal de détection d'erreur de phase, et renvoyant le signal de commande de fréquence au filtre de référence, et dans lequel la différence entre le signal de référence et le signal déphasé en provenance du filtre de référence est commandée de manière à obtenir une valeur prédéterminée.

FIG. 1

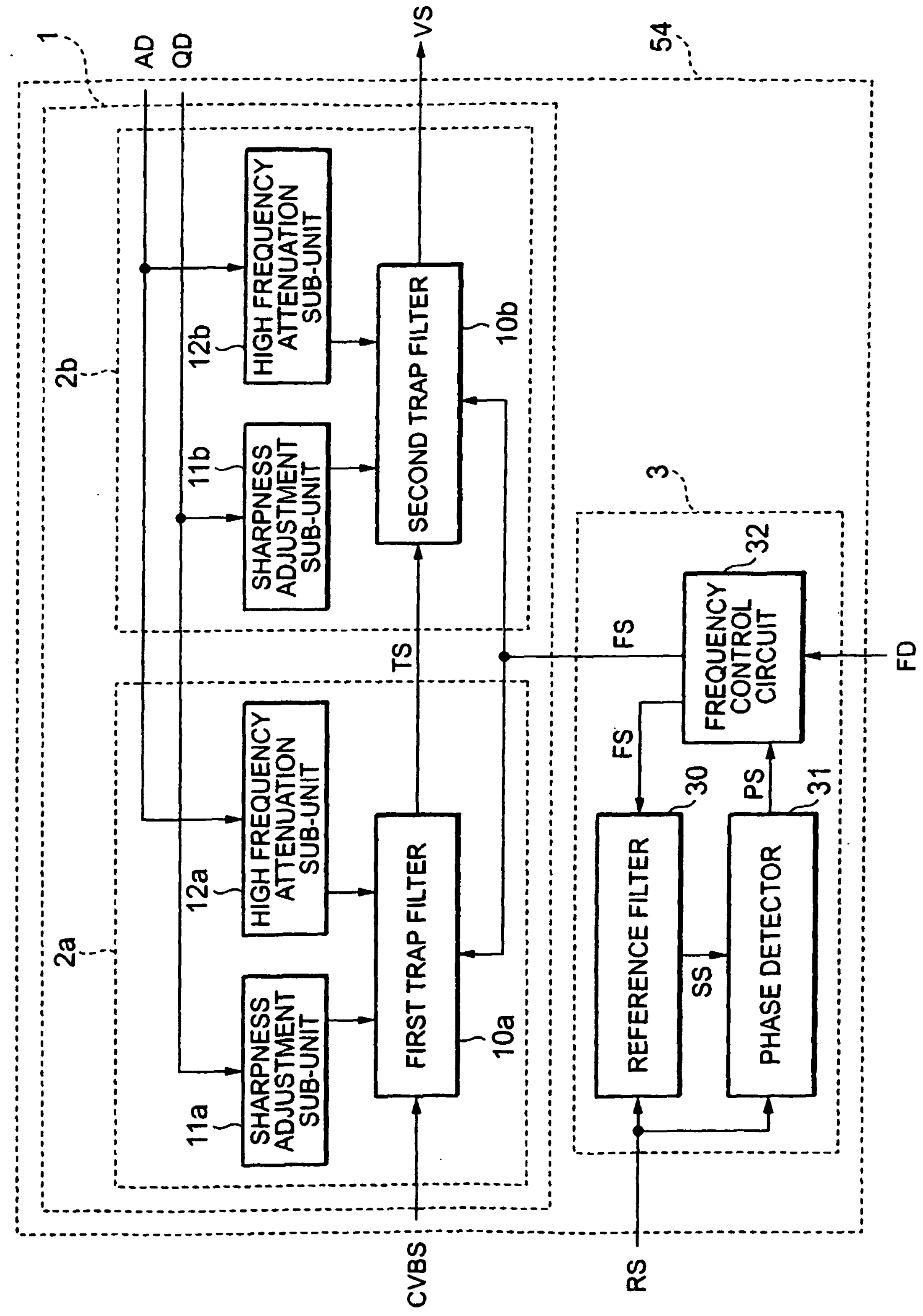

1
AD
QD
VS
54
2b
2a
HIGH FREQUENCY ATTENUATION SUB-UNIT
12b
SHARPNESS ADJUSTMENT SUB-UNIT
11b
SECOND TRAP FILTER
10b
TS
HIGH FREQUENCY ATTENUATION SUB-UNIT
12a
SHARPNESS ADJUSTMENT SUB-UNIT
11a
FIRST TRAP FILTER
10a
CVBS
3
FS
FREQUENCY CONTROL CIRCUIT
32
FD
FS
REFERENCE FILTER
30
PS
PHASE DETECTOR
31
SS
RS

FIG. 2

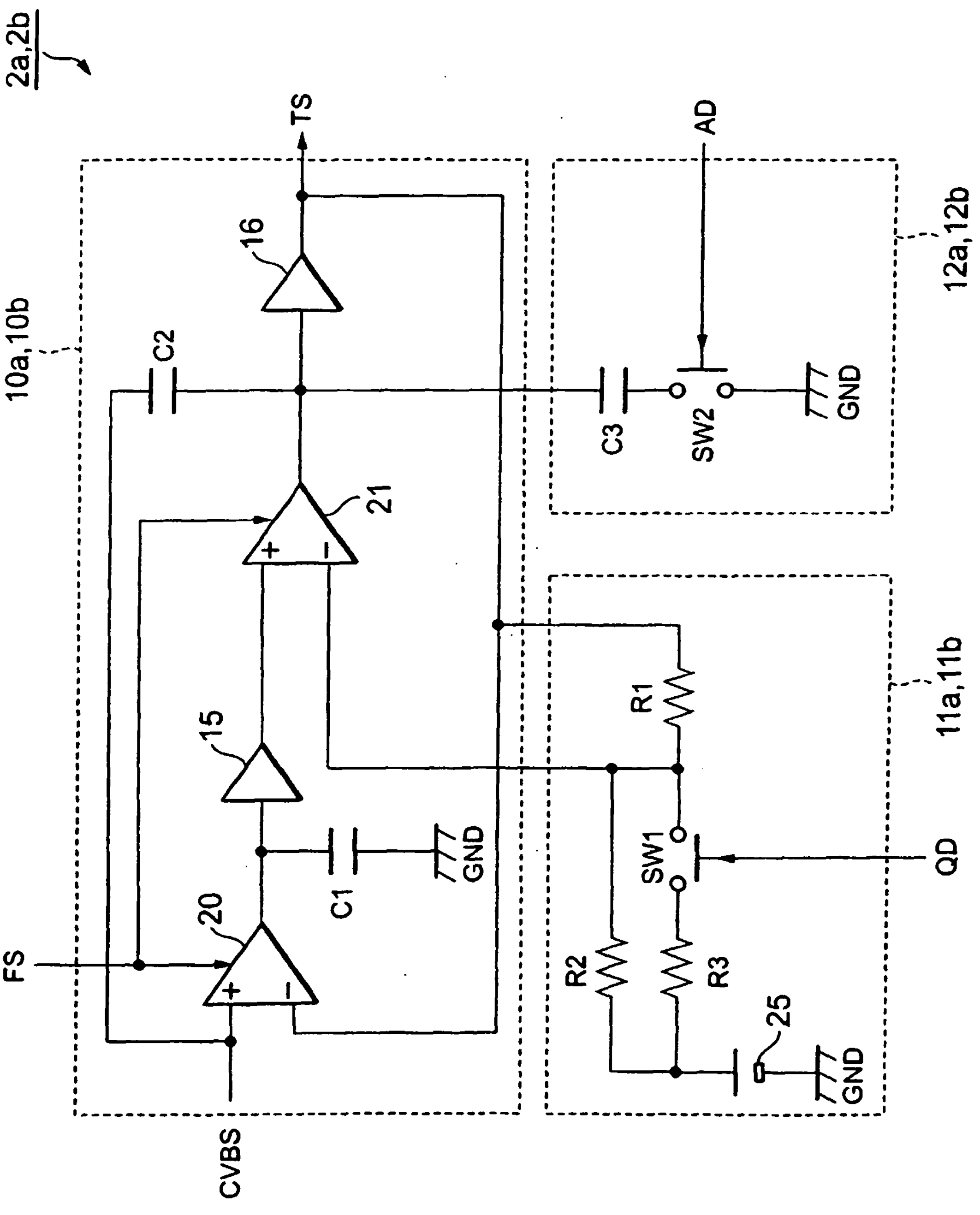
2a,2b
10a,10b
TS
16
C2
21
15
20
FS
C1
GND
CVBS
AD
12a,12b
C3
SW2
GND
R1
R2
R3
SW1
QD
11a,11b
25
GND

FIG. 3

(a)

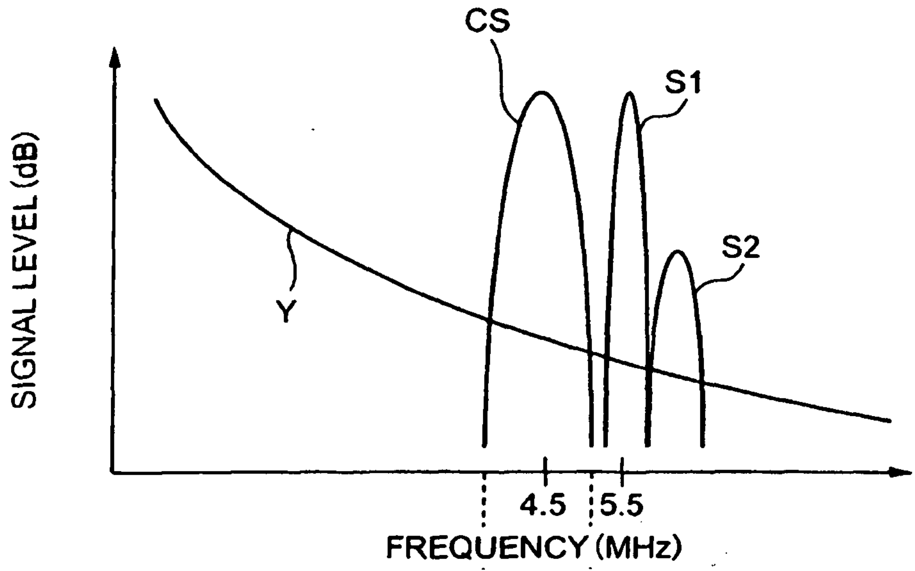
CS
S1
S2
Y
SIGNAL LEVEL (dB)
4.5
5.5
FREQUENCY (MHz)

(b)

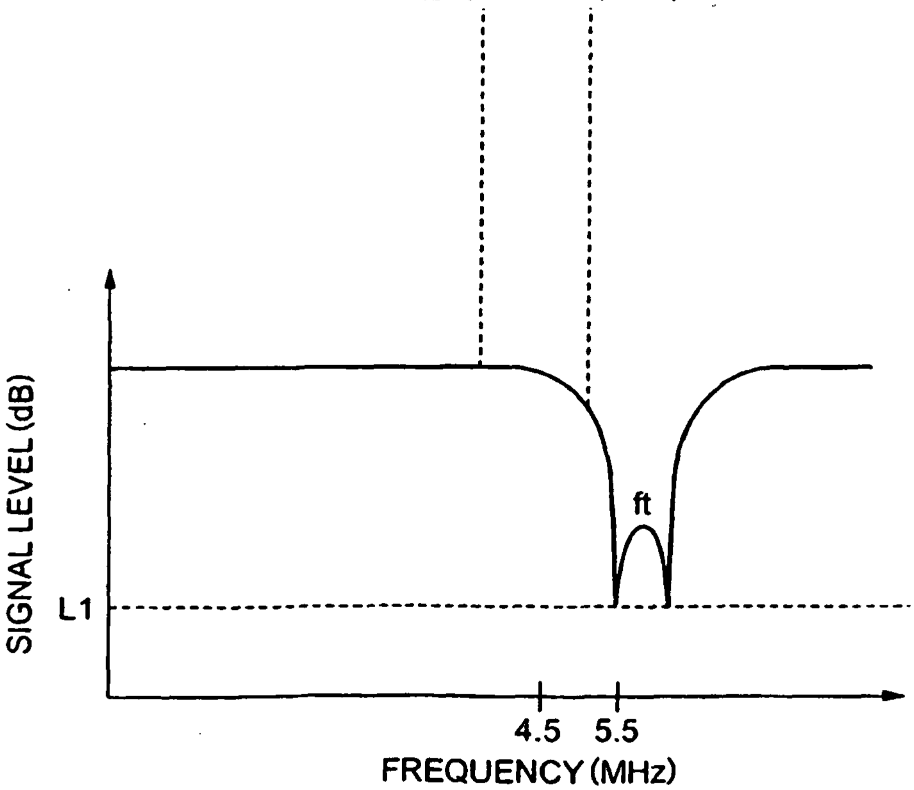
SIGNAL LEVEL (dB)
L1
ft
4.5
5.5
FREQUENCY (MHz)

FIG. 4

(a)

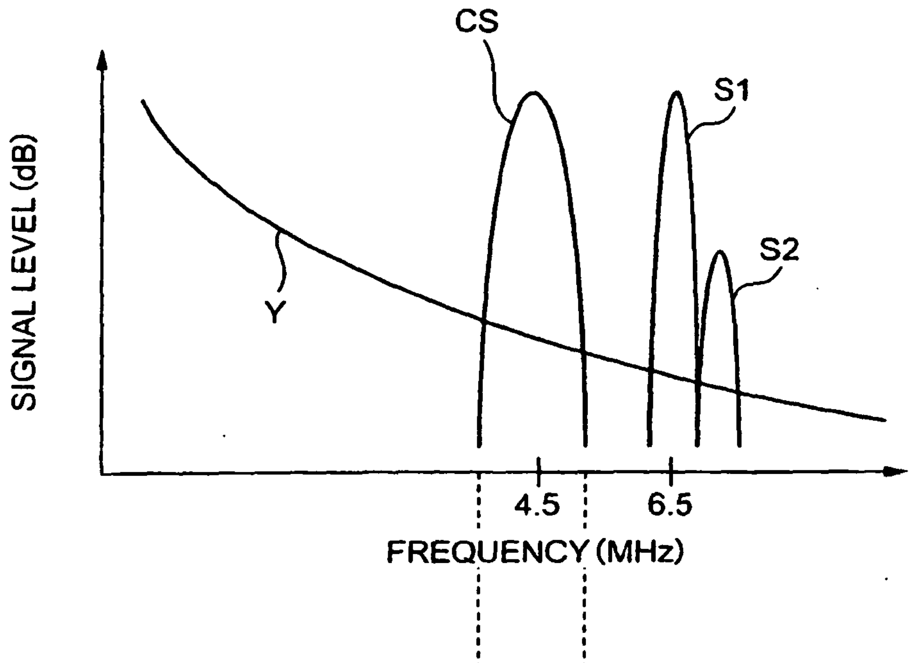
CS
S1
S2
Y
SIGNAL LEVEL (dB)
4.5
6.5
FREQUENCY (MHz)

(b)

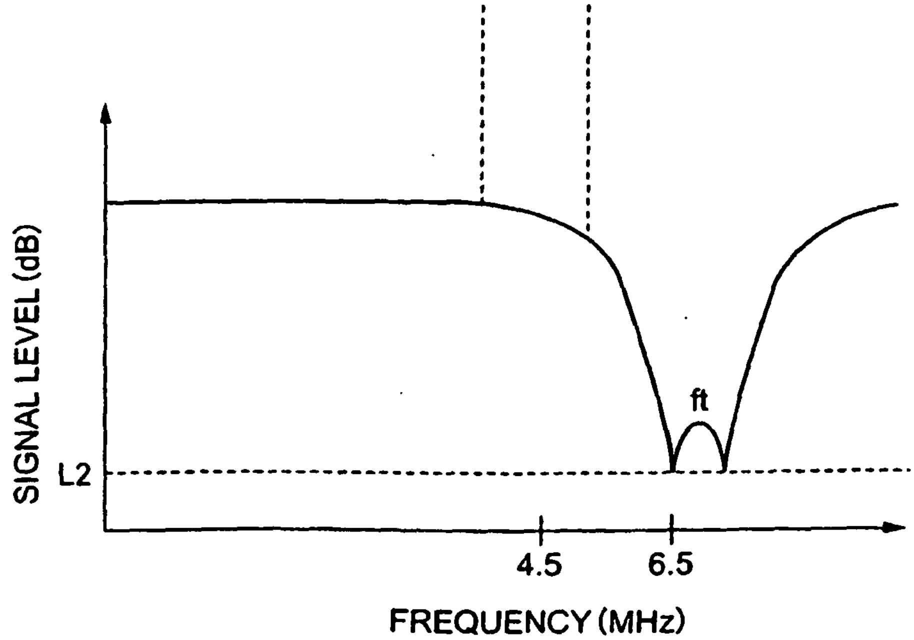
SIGNAL LEVEL (dB)
ft
L2
4.5
6.5
FREQUENCY (MHz)

FIG. 5A

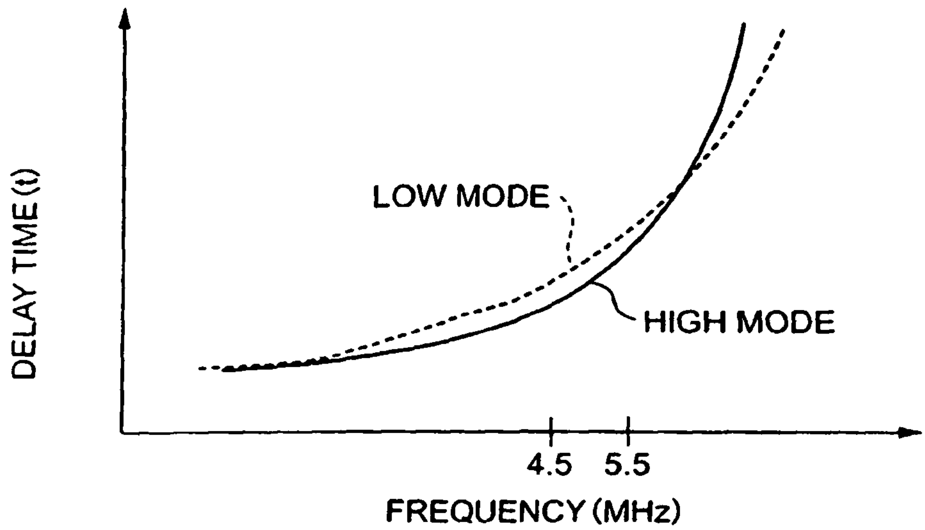
DELAY TIME (t)
LOW MODE
HIGH MODE
4.5
5.5
FREQUENCY (MHz)

FIG. 5B

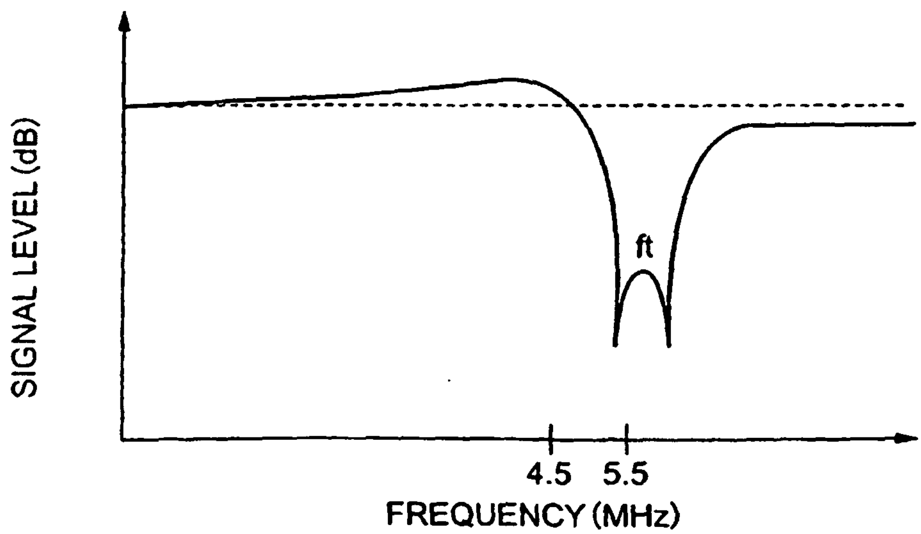
SIGNAL LEVEL (dB)
ft
4.5
5.5
FREQUENCY (MHz)

FIG. 6

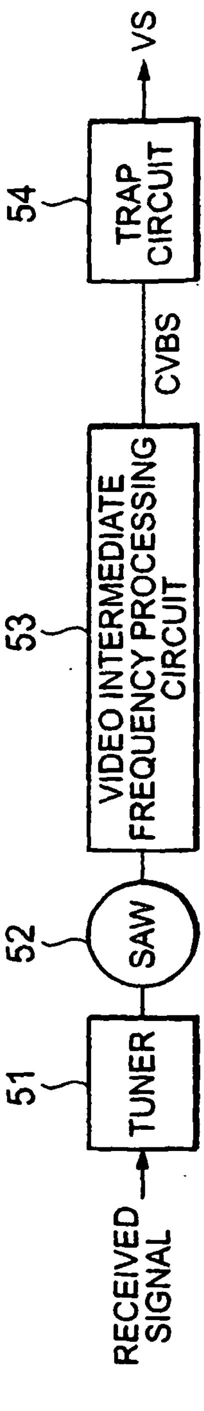
RECEIVED SIGNAL
51
TUNER
52
SAW
53
VIDEO INTERMEDIATE FREQUENCY PROCESSING CIRCUIT
CVBS
54
TRAP CIRCUIT
VS

FIG. 7

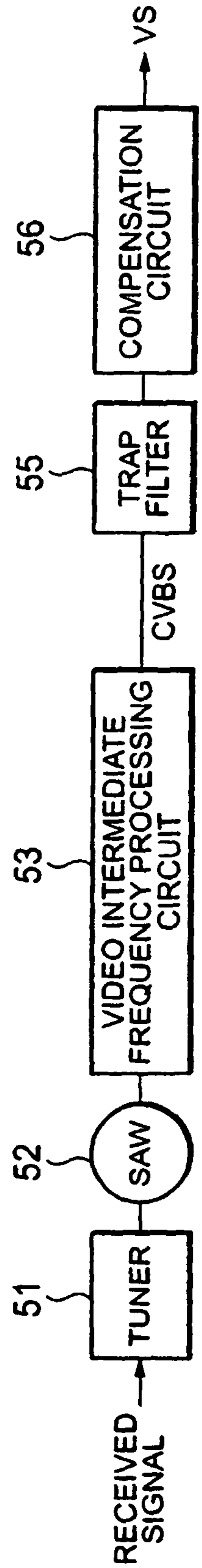
RECEIVED SIGNAL
51
TUNER
52
SAW
53
VIDEO INTERMEDIATE FREQUENCY PROCESSING CIRCUIT
CVBS
55
TRAP FILTER
56
COMPENSATION CIRCUIT
VS

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2002005912 A
- US 5774027 A